# FASCICULE DE BREVET EUROPEEN

(11) **EP 0 481 885 B1**
(45) Date de publication et mention de la délivrance du brevet: **14.09.1994**
(21) Numéro de dépôt: 91402761.0
(22) Date de dépôt: 16.10.1991
(51) Int. Cl.: F23R 3/08, F23R 3/06

(54) **Dispositif de refroidissement de la paroi d'une chambre de combustion**
Kühleinrichtung für eine Brennkammerwand
Cooling device for a combustion chamber wall

(30) Priorité: 17.10.1990 FR 9012785
(43) Date de publication de la demande: 22.04.1992
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Barbier, Gérard, Yves, Georges, F-91420 Morangis (FR); Beule, Frédéric, Bruno, F-94220 Charenton le Pont (FR); Desaulty, Michel, André, Albert, F-77240 Vert Saint Denis (FR); Latour, Jean-Marc, Christian, Michel, Patrick, F-41260 La Chaussée Saint Victor (FR); Masse, Bruno, Roger, Henri, F-77000 Vaux le Penil (FR)

(56) Documents cités:
- EP-A- 0 187 731
- FR-A- 2 450 349
- FR-A- 2 531 748
- GB-A- 2 074 307
- US-A- 4 700 544
- BWK BRENNSTOFF WÄRME KRAFT, vol. 27, no. 5, Mai 1975,Düsseldorf,DE,pages 201 - 205; D.Wahl, G. Kappler, J. Schmidt: "Messungen des Wärmeübergangs an filmgekühlten Flammrohr-Wandelementen"

## Description

On connaît déjà, par exemple par FR-A-2.116.363 et FR-A-2 531 748, la constitution d'une chambre de combustion d'une turbomachine délimitée par une paroi présentant une face interne et une face externe et séparant une enceinte de combustion d'un espace externe à cette enceinte de combustion, cette paroi comportant une pluralité de tronçons, l'extrémité amont du corps d'un tronçon déterminé étant placée à l'extérieur et à une certaine distance de l'extrémité aval du tronçon précédent et constituant un recouvrement de cette extrémité aval de manière à ménager un espace lamellaire qui, d'une part, est en communication par l'intermédiaire d'au moins un trou principal d'air de refroidissement avec l'espace externe à l'enceinte de combustion, en amont dudit recouvrement, d'autre part, débouche dans ladite enceinte de combustion sensiblement tangentiellement à la face interne dudit tronçon déterminé, des trous d'admission d'air primaire et/ou d'air de dilution des gaz chauds, d'axes perpendiculaires aux faces délimitant la paroi de chaque tronçon, traversant la paroi du corps dudit tronçon.

De manière usuelle, la paroi comporte divers trous qui permettent, d'une part, l'introduction dans le foyer des débits d'air nécessaires à la combustion (trous d'introduction de l'air primaire et/ou de l'air de dilution), d'autre part, l'introduction d'air de refroidissement des parois de la chambre de combustion, nécessaire à l'obtention d'une tenue thermique satisfaisante desdites parois aux hautes températures régnant dans la chambre de combustion (trous d'admission d'air de refroidissement).

Selon la technique connue, les films de refroidissement sont générés de part et d'autre des trous d'admission d'air primaire et/ou d'air de dilution, la position de ces derniers étant déterminée par les objectifs de performance de stabilité, rendement et carte de température.

Par ailleurs, les trous d'admissions d'air primaire et/ou d'air de dilution sont généralement des orifices avec de larges bords tombés permettant un bon guidage de l'air. La fabrication de ce type d'orifice est difficile lorsqu'il s'agit ultérieurement d'usiner les pièces, compte-tenu de la taille des orifices et d'une mauvaise ductilité de l'alliage choisi et oblige à conserver une distance importante entre les orifices et l'espace lamellaire générateur du film situé en aval.

Or, la position des films eux-mêmes doit être optimisée sur des critères d'efficacité globale de débit de refroidissement.

La présente invention vise à offrir plus de souplesse dans le positionnement relatif trous primaires/dilution, film, tout en conservant les avantages des orifices à bords tombés et couvre le cas où les orifices primaires/dilution et les trous principaux d'air de refroidissement sont immédiatement adjacents. Dans ce cas, une partie de la fonction de guidage des jets primaire/dilution peut-être assurée par la paroi de l'espace générateur du film aval.

Les avantageuses dispositions suivantes sont en outre de préférence adoptées :
- utilisation d'une pièce unique intégrant film et trous,
- l'effet dû aux bords tombés est assuré par un film d'air plus des goussets,
- alimentation du film en pression statique au droit du trou,
- une multitude de premiers trous complémentaires d'air de refroidissement traversent la zone de chaque tronçon de la paroi située de part et d'autre de chaque trou d'admission d'air primaire et/ou d'air de dilution,
- l'extrémité amont d'un tronçon, au-delà du corps dudit tronçon, est conformée en une nervure à deux branches, dont une première branche est sensiblement perpendiculaire aux faces du corps du tronçon et est jointive avec la face externe du tronçon précédent, et dont la deuxième branche relie la première branche au corps dudit tronçon, cependant que ledit trou principal d'air de refroidissement est réalisé sous la forme d'une multitude de trous principaux d'air de refroidissement qui traversent ladite première branche, les trous d'air primaire et/ou d'air de dilution étant tangents à l'arête de jonction de la première branche dudit tronçon avec la face externe du tronçon précédent,
- un tronçon déterminé est raccordé au tronçon précédent par soudage de la première branche de sa nervure sur la face externe dudit tronçon précédent,
- une multitude de deuxièmes trous complémentaires d'air de refroidissement traversent la deuxième branche de ladite nervure,
- chaque trou d'admission d'air primaire et/ou d'air de dilution est délimité, du côté de l'enceinte de combustion, par une lisière contenue dans la face interne de la paroi de manière à ne réaliser aucune saillie à l'intérieur de l'enceinte de combustion par rapport à ladite face interne.

Les avantages principaux de l'invention résident dans une meilleure utilisation des débits d'air de refroidissement, dont les films de refroidissement, s'étendant sur une longueur plus grande, ont une meilleure efficacité, notamment en amont dans l'axe longitudinal des trous d'air primaire et/ou d'air de dilution. Cette nouvelle technologie, qui conduit à placer lesdits orifices dans une zone refroidie, permet de limiter les contraintes mécaniques locales et permet ainsi de raccourcir chaque tronçon de paroi. Par ailleurs, selon une réalisation préférée, les trous d'admission d'air primaire et/ou d'air de dilution débouchent sans saillie dans la chambre de combustion : cette conformation facilite de manière importante le dépôt, sur la face interne de la paroi délimitant la chambre de combustion, d'un revêtement réfractaire.

L'invention sera mieux comprise et des caractéristiques secondaires et leurs avantages apparaîtront au cours de la description de réalisations données ci-dessous à titre d'exemple.

Il est entendu que la description et les dessins ne sont donnés qu'à titre indicatif et non limitatif.

Il sera fait référence aux dessins annexés, dans lequels :
- la figure 1 est une coupe axiale de la chambre de combustion d'une turbine à gaz, selon une première variante de réalisation conforme à l'invention,
- la figure 2 est un agrandissement du détail A de la figure 1,
- la figure 3 est une vue perspective d'une réalisation conforme à l'invention.

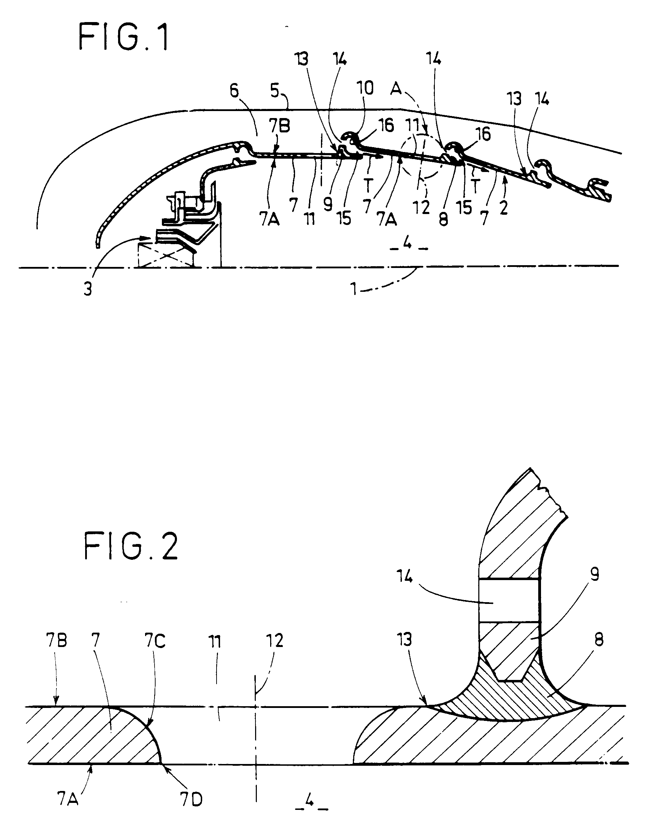

La figure 1 est une demi coupe d'une chambre de combustion d'un turbo-réacteur passant par l'axe 1 de cette chambre de combustion. De manière classique, la chambre de combustion comprend :
- une paroi 2, dont le fond constitue le dispositif d'injection de carburant 3, cette paroi délimitant l'enceinte de combustion 4,
- une enveloppe externe 5, qui entoure la paroi 2 en étant distante,
- un espace 6, externe à l'enceinte de combustion 4, compris entre la paroi 2 et l'enveloppe externe 5, permettant de canaliser le comburant, généralement de l'air, destiné à entretenir la combustion, à diluer les gaz de combustion pour rendre la combustion complète, et à créer, le long de la face interne de la paroi 2 des films d'air de refroidissement de ladite paroi.

Il peut être noté que la paroi 2 est elle-même constituée par plusieurs tronçons, assemblés les uns aux autres par soudage 8, comprenant chacun un corps 7 de tronçon et une nervure à deux branches, située en amont du corps 7 : une première branche 9 constitue l'extrémité amont du tronçon et s'étend en grande partie sensiblement perpendiculairement aux faces interne 7A et externe 7B du corps 7, en étant soudée 8 sur la zone d'extrémité de la face externe 7B du tronçon précédent, et, une deuxième branche 10 raccorde ladite première branche 9 au corps 7 du même tronçon.

Des trous 11, d'axes 12 sensiblement perpendiculaires aux faces 7A et 7B, de sections généralement circulaires, traversent le corps 7 de chaque tronçon, constituent les passages d'admission dans l'enceinte 4 de l'air de combustion et/ou de l'air de dilution des gaz de combustion et sont situés à proximité de la première branche 9 du tronçon suivant, en étant sensiblement tangents à la ligne 13 matérialisant le raccordement de cette première branche 9 avec le corps 7 du tronçon qu'ils traversent. Ces trous 11 ont des sections relativement grandes, déterminées en rapport avec les débits d'air de combustion et/ou de dilution nécessaires à l'obtention d'une combustion satisfaisante.

Une multitude de petits trous 14, dénommés trous principaux 14 d'air de refroidissement traversent la première branche 9 de chaque nervure et relient à l'espace 6, externe à l'enceinte de combustion 4, un espace lamellaire 15 compris entre la face interne 16 de la nervure (9-10) d'un tronçon et la face externe 7B de l'extrémité aval du tronçon précédent, cet espace lamellaire 15 débouchant dans l'enceinte de combustion 4, sensiblement tangentiellement (direction T) à la face interne 7A du tronçon comportant ladite nervure. Les trous principaux 14 d'air de refroidissmeent ont des sections notablement plus petites que celles des trous 11 d'air de combustion et/ou de dilution, et sont beaucoup plus nombreux que ces trous 11.

On note sur la figure 2, d'une part, que la face 7C délimitant un trou 11 est constituée par un profil de raccordement continu avec la face externe 7B du corps 7 du tronçon, d'autre part, l'arête 7D, par laquelle le trou 11 débouche dans l'enceinte de combustion 4, est contenue dans la face interne 7A du corps 7, aucune saillie ne dépassant cette face interne 7A.

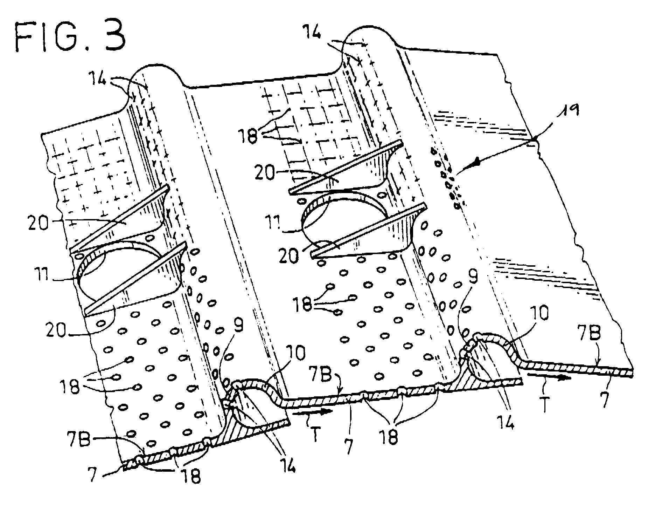

La figure 3 reprend la constitution qui vient d'être donnée de la paroi 2 de la chambre de combustion, en la complétant par la réalisation d'une multitude de premiers petits trous complémentaires 18, qui sont disposés soit entre deux trous 11 successifs d'air de combustion et/ou de dilution, soit plus généralement transversalement par rapport à l'axe de la chambre de combustion, de part et d'autre de chaque trou 11 d'air de combustion et/ou de dilution, ces premiers trous complémentaires traversant la paroi du corps 7 du tronçon concerné.

Dans la réalisation de la figure 3 proposée, les trous d'air de combustion sont délimités par des goussets 20, de sections sensiblement triangulaires, fixés, par paires de part et d'autre de chaque trou 11 d'air de combustion et/ou de dilution, sur la face externe 7B du corps 7 d'un tronçon et sur la face externe de la première branche 9 de la nervure du tronçon suivant, par soudage dans la réalisation décrite.

Le premier avantage de la réalisation décrite réside dans le fait que les trous 11 d'air de combustion et/ou d'air de dilution étant tangents aux lignes 13, sont situés le plus près possible de chaque première branche 9 des nervures des divers tronçons de paroi, adjacents aux orifices principaux 14 d'air de refroidissement, et dégagent donc au maximum la partie amont des corps 7 des tronçons dans lesquels ils sont réalisés. Or, les faces internes 7A desdits corps 7, qui doivent être refroidies par l'écoulement de films d'air de refroidissement provenant de l'espace 6, admis dans les espaces lamellaires 15 et injecté tangentiellement (T) aux dites faces internes 7A, ont le refroidissement le plus satisfaisant lorsque l'air de refroidissement lèche ces faces internes 7A sur la longueur la plus grande, c'est-à-dire aussi lorsque les trous 11, qui constituent des perturbations en ce qui concerne le processus de constitution des films d'air de refroidissement, dégagent au maximum les corps 7, ce qui est le cas dans les réalisations représentées.

L'absence de toutes saillies dépassant les faces internes 7A des tronçons 7, - l'absence de bords tombés pour les trous 11, notamment -, rend en outre particulièrement aisée la pose de revêtements réfractaires sur ces faces internes 7A, tout en évitant bien entendu la création de perturbations des films d'air de refroidissement.

De plus, les trous 11 étant adjacents aux nervures (9-10) conduisent à créer des configurations dans lesquelles les contraintes mécaniques locales sont limitées, réduites par rapport aux dispositions antérieures connues. Une possibilité supplémentaire découle de cette disposition : celle d'adopter des tronçons plus courts, et, par conséquent, plus résistants.

L'air de refroidissement traversant les trous principaux 14 d'air de refroidissement, permet la création de films efficaces tangents T aux faces internes 7A des corps 7 des divers tronçons. Les premiers trous complémentaires 18 permettent l'admission, dans la zone des trous 11 d'admission d'air de combustion et/ou de dilution, d'un complément d'air de refroidissement susceptible d'augmenter l'efficacité des films d'air de refroidissement, précisément dans les zones où la création de ces films risque d'être perturbée.

Enfin, les deuxièmes trous complémentaires 19 d'air de refroidissement permettent de compléter l'alimentation en air des espaces lamellaires 15, notamment en statique.

L'adoption ou non des goussets 20 de guidage à l'admission de l'air à travers les trous 11 d'air de combustion et/ou de dilution, est décidée en fonction des caractéristiques de fonctionnement du turbo-réacteur. L'adoption de tels goussets renforce l'efficacité du remplissage de l'enceinte 4 en air de combustion et/ou de dilution.

L'invention n'est pas limitée aux réalisations décrites, mais en couvre au contraire toutes les variantes qui pourraient leur être apportées sans sortir du cadre des revendications à-jointes.

## Revendications

1. Chambre de combustion d'une turbomachine délimitée par une paroi (2) présentant une face interne (7A) et une face externe (7B) et séparant une enceinte de combustion (4) d'un espace (6) externe à cette enceinte de combustion, cette paroi comportant une pluralité de tronçons (7), l'extrémité amont du corps d'un tronçon (7) déterminé étant placée à l'extérieur et à une certaine distance de l'extrémité aval du tronçon précèdant et constituant un recouvrement de cette extrémité aval de manière à ménager un espace lamellaire (15) qui, d'une part, est en communication par l'intermédiaire d'au moins un trou principal (14) d'air de refroidissement avec l'espace (6) externe à l'enceinte de combustion (4), en amont dudit recouvrement, d'autre part, débouche dans ladite enceinte de combustion (4) sensiblement tangentiellement (T) à la face interne (7A) dudit tronçon déterminé, des trous (11) d'admission d'air primaire et/ou d'air de dilution des gaz chauds, d'axes (12) perpendiculaires aux faces (7A-7B) délimitant la paroi de chaque tronçon (7), traversant la paroi du corps dudit tronçon (7),
caractérisé en ce que, l'extrémité amont d'un tronçon, au delà du corps dudit tronçon, est conformée en une nervure à deux branches (9, 10), dont une première branche (9) est sensiblement perpendiculaire aux faces (7A-7B) du corps du tronçon et est jointive avec la face externe (7B) du tronçon précédent, et dont la deuxième branche (10) relie la première branche (9) au corps (7) dudit tronçon, cependant que les trous (11) d'air primaire et/ou d'air de dilution sont tangents à l'arête (13) de jonction de la première branche (9) dudit tronçon avec la face externe (7B) du tronçon précédent.

2. Chambre de combustion selon la revendication 1 caractérisé en ce que le trou principal (14) d'air de refroidissement est réalisé sous la forme d'une multitude de trous principaux (14) d'air de refroidissement qui traversent ladite première branche (9) de la nervure.

3. Chambre de combustion selon l'une des revendications 1 ou 2, caractérisé en ce qu'une multitude de premiers trous complémentaires (18) d'air de refroidissement traversent la zone de chaque tronçon de la paroi située de part et d'autre de chaque trou (11) d'admission d'air primaire et/ou d'air de dilution.

4. Chambre de combustion selon l'une quelconque des revendications 1 à 3, caractérisée en ce qu'un tronçon déterminé est raccordé au tronçon précédent par soudage (8) de la première branche (9) de sa nervure sur la face externe (7B) dudit tronçon précédent.

5. Chambre de combustion selon l'une quelconque des revendications 3 à 4, caractérisée en ce qu'une multitude de deuxièmes trous complémentaires (19) d'air de refroidissement traversent la deuxième branche (10) de ladite nervure.

6. Chambre de combustion selon l'une quelconque des revendications 1 à 5, caractérisée en ce que chaque trou (11) d'admission d'air primaire et/ou d'air de dilution est délimité, du côté de l'enceinte de combustion, par une lisière (7D) contenue dans la face interne (7A) de la paroi (7) de manière à ne réaliser aucune saillie à l'intérieur de l'enceinte de combustion (4) par rapport à ladite face interne (7A).

## Claims

1. A turbomachine combustion chamber bounded by a wall (2) having an inside surface (7A) and an outside surface (7B) and separating a combustion enclosure (4) from a gap (6) outside the same, the wall (6) being embodied by a number of elements (7), the upstream end of the body of an element (7) being disposed outside and at a distance from the downstream end of the immediately previous element and so overlapping such end as to bound a lamellar space (15) which communicates by way of at least one main cooling air aperture (14) with the gap (6) upstream of the overlap and extends into the combustion enclosure (4) substantially tangentially (T) to the inside surface (7A) of the said element (7), inlet apertures (11) for primary air and/or air for diluting hot gases and having axes (12) perpendicular to the wall surfaces (7A, 7B) extending through the wall (2) of each element,
characterised in that the upstream end of an element (7) is shaped beyond the body of the element as a rib having two arms (9, 10), the first arm (9) being substantially perpendicular to the wall surfaces (7A, 7B) and contiguous with the outside surface of the immediately previous element, the second arm (10) connecting the first arm (9) to the body (7) of the element, the inlet apertures (11) being tangential to the junction edge (13) between the first arm (9) of an element and the outside surface (7B) of the immediately previous element.

2. A combustion chamber according to claim 1, characterised in that the main cooling air aperture (14) is embodied as a plurality of main cooling air apertures (14) which extend through the first arm (9) of the rib.

3. A combustion chamber according to claim 1 or 2, characterised in that a plurality of first complementary cooling air apertures (18) extend through that zone of each wall element which is disposed on either side of each inlet aperture (11) for primary air and/or diluting air.

4. A combustion chamber according to any of claims 1 to 3, characterised in that any element is connected to the previous element by welding (8) of the first arm (9) of its rib to the outside surface (7B) of the immediately previous element.

5. A combustion chamber according to claim 3 or 4, characterised in that a plurality of second complementary cooling air apertures (19) extend through the second arm (10) of the rib.

6. A combustion chamber according to any of claims 1 to 5, characterised in that each inlet aperture (11) for primary air and/or diluting air is bounded on the combustion chamber side by an edging (7D) so devised in the inside surface (7A) of the wall (7) as not to project into the combustion chamber (4) from the last-mentioned surface.

## Patentansprüche

1. Brennkammer einer Turbomaschine, die von einer Wand (2) mit einer Innenfläche (7A) und einer Außenfläche (7B) begrenzt wird, die einen Brennraum (4) von einem außerhalb dieses Brennraums liegenden Zwischenraum (6) trennt und eine Mehrzahl von Teilstücken (7) umfaßt, wobei der stromaufwärtige Endbereich eines bestimmten Teilstücks (7) außerhalb und in einem gewissen Abstand von dem stromabwärtigen Endbereich des vorhergehenden Teilstücks angeordnet ist und eine solche Überdeckung für diesen stromabwärtigen Endbereich bildet, daß ein lamellarer Zwischenraum (15) ausgespart wird, der einerseits stromaufwärts der genannten Überdeckung über wenigstens eine Kühllufthauptöffnung (14) mit dem Zwischenraum (6) außerhalb des Brennraums (4) in Verbindung steht und andererseits annähernd tangential (T) zur Innenfläche (7A) des bestimmten Teilstücks in den Brennraum (4) einmündet, wobei die Wand des Körpers des genannten Teilstücks (7) von Zutrittsöffnungen (11) für Primärluft und/oder Luft zur Verdünnung der heißen Gase durchdrungen wird, deren Achsen (12) senkrecht zu den die Wand jedes Teilstücks (7) begrenzenden Flächen (7A-7B) verlaufen,
**dadurch gekennzeichnet**,
daß der stromaufwärtige Endbereich eines Teilstücks über den Körper dieses Teilstücks hinaus als Rippe mit zwei Schenkeln (9, 10) ausgebildet ist, von denen ein erster Schenke (9) annähernd senkrecht zu den Flächen (7A-7B) des Körpers des Teilstücks verläuft und an der Außenfläche (7B) des vorhergehenden Teilstücks anstößt und der zweite Schenkel (10) den ersten Schenkel (9) mit dem Körper (7) des genannten Teilstücks verbindet, während die Zutrittsöffnungen (11) für Primärluft und/oder Verdünnungsluft die Verbindungslinie (13) des ersten Schenkels (9) des Teilstücks mit der Außenfläche (7B) des vorhergehenden Teilstück berühren.

2. Brennkammer nach Anspruch 1, dadurch gekennzeichnet, daß die Kühllufthauptöffnung (14) in Form einer Vielzahl von Kühllufthauptöffnungen (14) realisiert ist, die den ersten Schenke (9) der Rippe durchdringen.

3. Brennkammer nach einem der Ansprüche 1 oder 2, dadurch gekennzeichnet, daß die zu beiden Seiten jeder Zutrittsöffnung (11) für Primärluft und/oder Verdünnungsluft liegende Zone jedes Teilstücks der Wand von einer Vielzahl von ersten Kühlluftergänzungsöffnungen (18) durchdrungen wird.

4. Brennkammer nach einem der Ansprüche 1 bis 3, dadurch gekennzeichnet, daß ein bestimmtes Teilstück durch Verschweißen (8) des ersten Schenkels (9) seiner Rippe mit der Außenfläche (7B) des vorhergehenden Teilstücks mit letzterem verbunden ist.

5. Brennkammer nach einem der Ansprüche 3 bis 4, dadurch gekennzeichnet, daß der zweite Schenkel (10) der Rippe von einer Vielzahl von zweiten Kühlluftergänzungsöffnungen (19) durchdrungen wird.

6. Brennkammer nach einem der Ansprüche 1 bis 5, dadurch gekennzeichnet, daß jede Zutrittsöffnung (11) für Primärluft und/oder Verdünnungsluft auf der Seite des Brennraums von einer Kante (7D) begrenzt wird, die in der Innenfläche (7A) der Wand (7) enthalten ist, derart daß im Innern des Brennraums keinerlei Vorsprünge gebildet werden, die über diese Innenfläche (7A) hinausragen.
